# EUROPEAN PATENT APPLICATION

(11) **EP 1 645 507 A1**
(43) Date of publication of application: **12.04.2006**
(21) Application number: 04077769.0
(22) Date of filing: 06.10.2004
(51) Int. Cl.: B64D 11/06, B60N 2/30

(54) **System for transportation and/or storage of persons in transportation vehicles**

(71) Applicant: Nederlandse Organisatie voor Toegepast-Natuurwetenschappelijk Onderzoek TNO, 2628 VK Delft (NL)
(72) Inventor: Delleman, Nicolaas Johannes, 1181 AJ Amstelveen (NL); Oudendijk, Marleen Lammigje Wilhelmina, 3833 JR Leusden (NL)
(74) Representative: Winckels, Johannes Hubertus F.

(57) **Abstract**

System for transportation and/or storage of persons in transportation vehicles, comprising personal transport modules comprising a personal support module (1), fit to to sit upon (6), to create space for standing and to lean against (7). Moreover, each personal transport module may comprise a personal luggage module (12) mounted above the person and having its entrance (13) either at the person's front or back side. Each support module may comprise a first (4) and a second support part (5), the first one being movable upwards and downwards, and the second one being pivotally mounted to the first support part around a horizontal axis. In a first support position (6) the first support part has a position fit to act as a backrest and the second support part has a position fit to act as a seat. In a second support position (7), both the first support part and the second support part have a position fit for standing or leaning support of the using person. The first and the second support part extend mainly vertically and in line with each other. Each support module may be mounted pivotally (3) around a vertical axis and may have means for positioning it in a default position (8), in which the person sits or stands in the vehicle's transportation direction. In an auxiliary position (9) the first and second support part may be set in the upright support position while extending in a previously set direction, e.g. to form paths (10) between them to or from the entrances and/or exits (11) of the transportation vehicle.

## Description

### FIELD

The invention refers to a system for transportation and/or storage of persons in transportation vehicles, especially in aircraft etc., comprising "personal transport modules", hereinafter indicated by PTM, such PTM comprising a person support module, hereinafter indicated by PSM, fit for the relevant person to sit upon. Additionally, such a PTM may comprise a personal luggage (storage) module, hereinafter indicated by PLM, for putting away personal luggage etc., said PLMs being mounted above the person's sitting position.

### BACKGROUND

The present layout and design of aircraft etc. leads to (1) limited posture variation of the passengers and (2) a rather long time needed for getting in and out the airplane (ingress/egress).

Especially in the economy class, airplane passengers are faced with confined sitting places. Also it has been shown that passengers hardly move away from their sitting places, e.g. not to bother other passengers and because there are hardly places to stand comfortable and undisturbed. Limited posture variation often will lead to physical discomfort and may cause negative health effects like Deep Venous Thrombosis etc. The problems will become bigger the longer the flight lasts, e.g. with so-called "ultra long haul flights" of e.g. 18 hours non-stop.

The getting in and out of passengers may be slowed down by obstructions in the aisle, e.g. caused by passengers being busy filling the overhead storages (bins) with their personal luggage. Airlines assign a high priority to reducing the ingress/egress times of the passengers in order to shorten the tum-around-times of the airplanes.

### SUMMARY OF THE INVENTION

Below a new system will be discussed which aims to improve prior art systems.

One aspect of the new system is that the personal transport modules (PTMs) comprise a person support module (PSM), fit for passengers to sit upon, but besides that, enabling the passenger to stand upright in a comfortable way. This PSM encourages posture variation during the flight, thus reducing physical discomfort and negative health effects, while not needing more floor area than a conventional PTM.

Another aspect of the new system, comprising PSMs fit for sitting as well as standing, is their ability to be -preferably- combined synergetically with a personal luggage module (PLM), for storing the passenger's luggage etc.. The preferred PLM, has its entrance mainly either at the person's front or back side when sitting. When the entrance of the PLM is at the passenger's front (or back) side, the passenger can use (fill/empty) the storage while using the PSM in its upright standing support position. As a result of this, the velocity of getting in and out of the passengers will be improved because the passengers, filling (or emptying) their personal bins with luggage, will not obstruct the aisles as in conventional aircrafts, as they can do it while standing in their own PTM area. The result of using such novel storages is that the change times of the passengers will be reduced and the turn around times of the airplanes will be shortened, and that passengers do not have to bother other passengers when going to and away from their own PTM area.

Returning now to the PSM, as a preferred embodiment the PSM may comprise a first support part (backrest) and a second support part (seat), the first support part being movable upwards and downwards, and the second part being pivotally mounted to the first support part around a horizontal axis. The PSM, moreover, may comprise means for setting the first and second support part in a first support position in which the first support part has a position fit to act as a backrest and in which the second support part has a position fit to act as a seat. Moreover, the PSM may comprise means for setting the first and second support part in a second support position, in which both the first support part and the second support part have a position fit for standing or leaning support of the passenger. In said second support position -the stand support position-the first support part preferably is moved upwards and the first and the second support part extend (mainly) vertically and in line with each other.

To improve the flow of passengers, getting in or out the vehicle, the PSMs preferably are mounted pivotally around a vertical axis. Additionally, the PSMs preferably comprise means for positioning the PSM in a default position, in which the relevant person sits or stands in the vehicle's default transportation direction. Preferably, the PSMs comprise means for positioning the PSM in an auxiliary position, in which the first and second support part are set in the upright support position and in which the first and second support part extend in a previously set direction. The auxiliary positions of the various PSMs are preferably set so as to form paths between them leading to or from one or more entrances and/or exits of the transportation vehicle. The advantages of these and the further aspects outlined above, will be discussed below more in detail.

### EMBODIMENTS

Figure 1 shows the interior of an airplane, comprising a number of PSMs.
Figure 2 shows a group of PSMs, some in sitting position, some in standing position (first and second support function).
Figure 3 shows a group of PSMs, in standing position, some pivoted around the vertical axis.
Figure 4 shows a number of PSMs, positioned in their respective auxiliary positions, forming paths to or from the airplane's entrances/exits.
Figure 5 shows a group of PTMs, each comprising a novel PSM and a novel PLM.

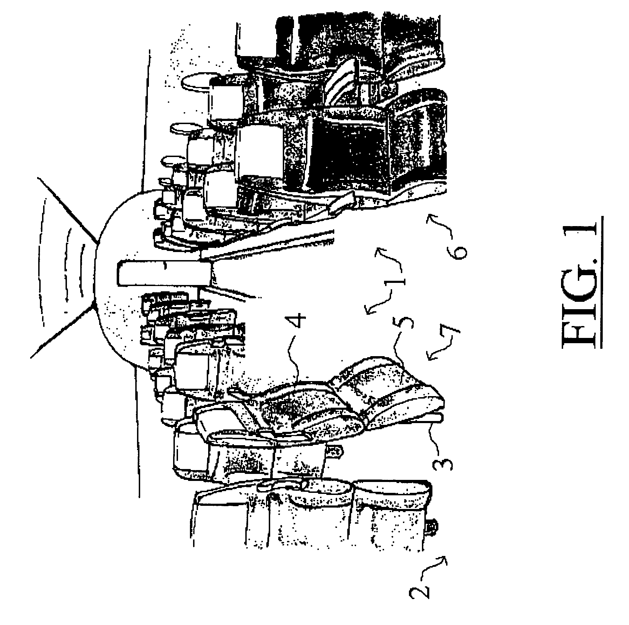

Figure 1 shows the interior of an airplane, comprising a number of personal support modules (PSM) 1. Each module 1 is mounted to the floor 2 of the interior by means of a spindle 3. The modules 1 are fit to sit upon, to create space for standing and to lean against. To enable that, the module 1 comprises a first support part 4 and a second support part 5, the first support part 4 being movable upwards and downwards along the spindle 3, and the second part 5 being pivotally mounted to the first support part around a horizontal axis. The module 1, moreover, comprises a mechanism (not shown) for setting the first and second support part 4 and 5 in a first support position 6 in which the first support part 4 has a position fit to act as a backrest and in which the second support part 5 has a position fit to act as a seat. The mechanism is also fit for setting the first and second support part 4 and 5 in a second support position 7, in which both the first support part 4 and the second support part 5 have a position fit for standing or leaning support of a passenger. In the second support position 7, the first support part 4 is moved upwards along the spindle 3 and the second support part 5 is rotated downwards, resulting in that the first and the second support part extend mainly vertically, in line with each other. Optionally, the first and second support part could be folded together by rotating the second support part 5 upwards instead of downwards, but that may be disadvantageous as the folded first and second support part will be thicker than when stretched in line with each other as shown in figure 1.

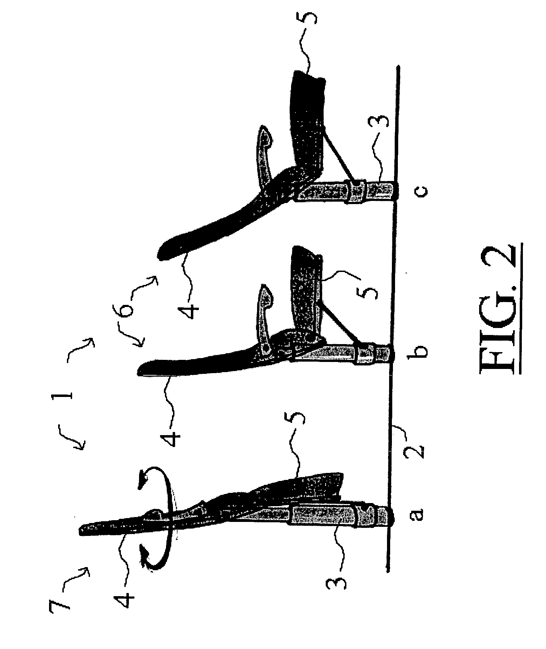

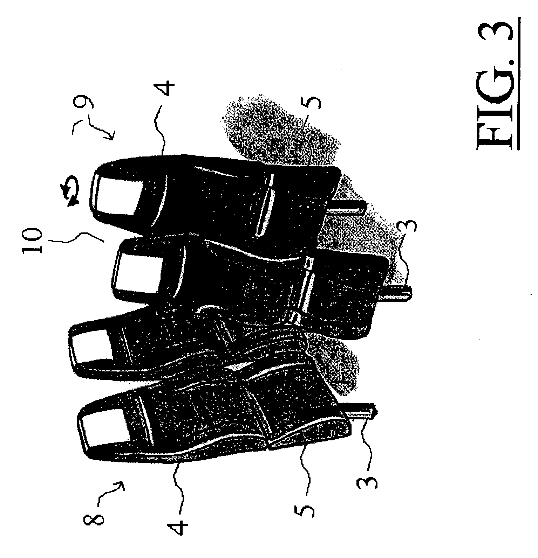

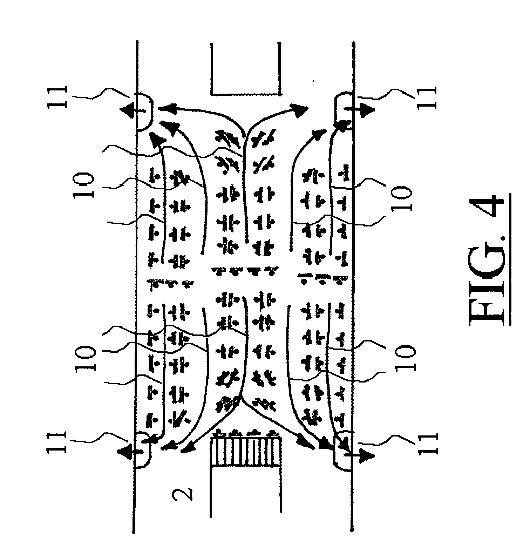

Figures 2 and 3 show a group of PS modules 1, some in the first support ("sitting") position 6 (figure 2b and 2c), some in standing position 7 (figure 2a and 3). Figure 2a shows the module 1 in its second support position 7, the first support part 4 being moved upwards along the spindle 3 and the second support part 5 being rotated downwards, resulting in that the first and the second support part extend mainly vertically, in line with each other. The module 1 may be pivotal around the axis of the spindle 3, to enable to set module 1 into a certain (default or auxiliary) direction. In figure 4 this is illustrated further. Figures 2 b and 2c show the first and second support part 4 and 5 of module 1 being set in its first support position 6 in which the first support part 4 has a position fit to act as a backrest and the second support part 5 a position fit to act as a seat. The first support part 4, functioning as a backrest, may be set in different positions, as shown in figures 2b and 2c. In a similar way the second support part 5, functioning as a seat, may be set in different positions and/or heights (not shown explicitly). The backrest 4 may even be set into a "sleep" position and a leg rest may be added to the seat 5. For the passenger's convenience the module may be rotated -around the spindle 3- somewhat to the left or to the right. Even a rotation of e.g. 180 degrees may be made possible, e.g. to be able to cushion the effects of a hard landing in case of emergency. In "sleep" position, neighboring PS modules may be set, at the spindle 3, at different heights, to realize more room for the passengers' (extending) body parts.

Figure 3 shows that the module 1 is pivotal around the axis of the spindle 3, to enable to set module 1 into a certain direction, e.g. into a default direction 8, in which the module may be used during the airplane's flight and the passenger sits or stands in the airplane's flight direction, or into an auxiliary (previously set) direction 9, enabling that e.g. when passengers get in or out of the airplane under normal or emergency circumstances, the space 10 between the modules 1, set in their auxiliary position, can be used as (auxiliary) gangways or paths to or from entrances and/or exits of the airplane. Figure 4 shows a number of modules, positioned in their respective auxiliary positions, forming paths to or from the airplane's entrances/exits 11 and thus improving the flow of passengers.

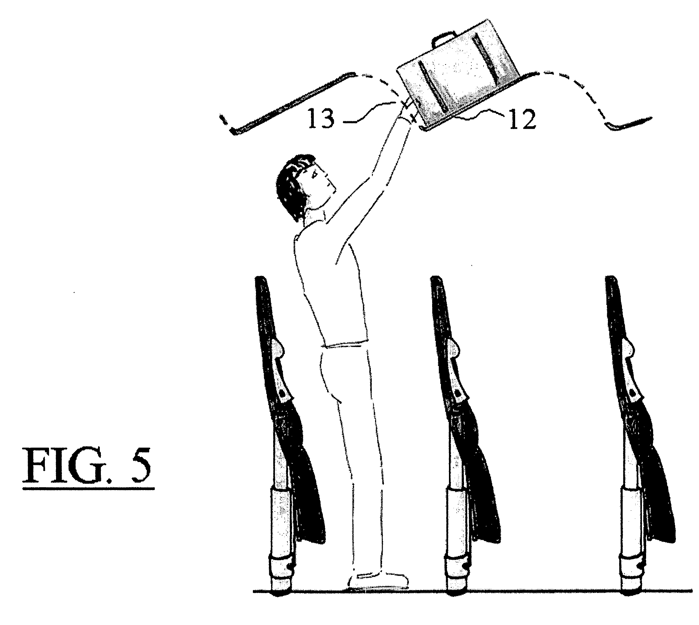

Figure 5 shows a group of personal transport modules (PTM), each comprising a personal support module (PSM), completed with a personal luggage module (PLM) 12, perpendicular to the airplane's flight direction. The storages 12 are mounted above the passengers' in their sitting position and have their entrance 13 either at the passenger's front or -optionally- at the passenger's back side. As the PSM 1 -as discussed above- is enabled to facilitate and support passengers to sit down as well as to stand upright, the passengers are able to enter - via the entrance 13 at the front or back side- their personal luggage module very easily, without bothering other passengers either during getting in or out the airplane or during the flight.

## Claims

1. System for transportation and/or storage of persons in transportation vehicles, comprising personal transport modules, hereinafter indicated by PTM, such PTM comprising a personal support module (1), hereinafter indicated by PSM, fit for the relevant person to sit upon (6), as well as fit for the relevant person to be used as standing and/or leaning support (7).

2. System according to claim 3, the PTM comprising a personal luggage module (12), hereinafter indicated by PLM, for putting away the persons' personal luggage etc., said PLMs being mounted above the person in sitting position using said PSM, the PLM having its entrance (13) mainly either at the person's front or back side when sitting.

3. System according to claim 1, the PSM comprising a first support part (4) and a second support part (5), the first support part being movable upwards and downwards, and the second part being pivotally mounted to the first support part around a horizontal axis, the PSM, moreover, comprising means for setting the first and second support part in a first support position (6) in which the first support part has a position fit to act as a backrest and in which the second support part has a position fit to act as a seat, as well as means for setting the first and second support part in a second support position (7), in which both the first support part and the second support part have a position fit for standing or leaning support of the relevant person.

4. System according to claim 3, in said second support position, the first support part being moved upwards and the first and the second support part extending mainly vertically and in line with each other.

5. System according to claim 3, said PSM being mounted pivotally (3) around a vertical axis.

6. System according to claim 5, said PSMs having means for positioning the PSM in a default position (8), in which the relevant person sits or stands in the vehicle's default transportation direction.

7. System according to claim 5, said PSMs having means for positioning the PSM in an auxiliary position (9), in which the first and second support part are set in said second support position and in which the first and second support part extend in a previously set direction.

8. System according to claim 7, the auxiliary positions of the various PSMs being set so as to form one or more paths (10) between them leading to or from one or more entrances and/or exits (11) of the transportation vehicle.
